# EUROPÄISCHE PATENTSCHRIFT

(11) **EP 2 553 192 B1**
(45) Veröffentlichungstag und Bekanntmachung des Hinweises auf die Patenterteilung: **10.04.2019**
(21) Anmeldenummer: 11711744.0
(22) Anmeldetag: 05.02.2011
(51) Int. Cl.: E05B 81/66, E05B 85/26, B60R 16/00

(54) **KRAFTFAHRZEUGTÜRVERSCHLUSS**
MOTOR VEHICLE DOOR LATCH MECHANISM
SERRURE DE PORTE DE VÉHICULE À MOTEUR

(30) Priorität: 31.03.2010 DE 202010004424 U
(43) Veröffentlichungstag der Anmeldung: 06.02.2013
(73) Patentinhaber: Kiekert Aktiengesellschaft, 42579 Heiligenhaus (DE)
(72) Erfinder: HERRMANN, Michael, 47506 Neukirchen-Vluyn (DE); HANDKE, Armin, 47269 Duisburg (DE); BENDEL, Thorsten, 46149 Oberhausen (DE); OCHTROP, Matthias, 46284 Dorsten (DE)
(74) Vertreter: Nunnenkamp, Jörg
(86) Internationale Anmeldenummer: PCT/DE2011/000108
(87) Internationale Veröffentlichungsnummer: WO 2011/120484

(56) Entgegenhaltungen:
- DE-A1- 4 213 131
- DE-A1- 10 355 705
- DE-A1-102006 048 026
- DE-C1- 4 436 617
- DE-U1-202007 005 076
- DE-U1-202008 010 423
- FR-A1- 2 477 762

## Beschreibung

Die Erfindung betrifft einen Kraftfahrzeugtürverschluss, mit einer Schaltungsanordnung mit wenigstens einem Sensor, und mit zumindest einer angeschlossenen Steuereinheit, wobei der Sensor zwei oder mehr Schaltzustände aufweist, wobei ferner an den Sensor zwei unterschiedliche Steuereinheiten angeschlossen sind, und wobei der Sensor einen Schalter sowie zwei oder mehr Strompfade eines Leitungsnetzwerkes aufweist.

Bei einem Kraftfahrzeugtürverschluss entsprechend der DE 20 2008 010 423 U1 wird so vorgegangen, dass die beiden Schaltzustände des Sensors zu unterschiedlichen Strompfaden eines Leitungsnetzwerkes gehören. Dabei sind im Wesentlichen zwei Strompfade realisiert, zwischen denen der Sensor umschaltet. Auf diese Weise kann beispielsweise die Stellung einer Drehfalle mit Hilfe eines Ein-/Ausschalters als Sensor abgefragt werden. Das hat sich grundsätzlich bewährt.

Darüber hinaus ist durch die DE 42 13 131 A1 eine redundante Schalteranordnung bekannt geworden, die mit zwei redundanten parallelen elektrischen Leitungen ausgerüstet ist. Die Leitungen weisen je einen Schalter bestehend aus wenigstens einem Kontaktpaar in jeder der beiden Leitungen auf. Dem Zweifachschalter ist eine Abfrageeinheit mit einer Fehlererkennungseinrichtung nachgeschaltet. Die Abfrageeinheit fragt die elektrischen Schaltzustände der Kontaktpaare ab. Auf diese Weise will man eine Schalteranordnung mit aktiver Redundanz diagnosefähig ausführen. Die Diagnosefähigkeit drückt aus, dass beispielsweise Zwischenzustände eines oder beider Schalter zuverlässig ermittelt werden können.

Im Rahmen des gattungsbildenden Standes der Technik nach der DE 10 2006 048 026 A1 wird eine Kraftfahrzeugschlossanordnung vorgestellt, die mit einem Kraftfahrzeugschloss ausgerüstet ist, dem ein Schlossfallensensor zur Überwachung der Schlossfallenstellung sowie ein Sperrklinkensensor zur Überwachung der Sperrklinkenstellung zugeordnet sind. Außerdem werden zur Bereitstellung unterschiedlicher automatischer Funktionen der Kraftfahrzeugschlossanordnung eine erste Steuereinheit und eine zweite Steuerungseinheit realisiert. Für beide Steuerungseinheiten bilden die Sensorsignale des Schlossfallensensors bzw. des Sperrklinkensensors relevante Eingangssignale.

Die erste Steuerungseinheit ist mit dem Schlossfallensensor und/oder mit dem Sperrklinkensensor gekoppelt. Außerdem stellt die erste Steuerungseinheit basierend auf den Sensorsignalen Eingangssignale für die zweite Steuerungseinheit bereit. Hierdurch soll der Schließzustand eines Kraftfahrzeugschlosses mit minimalem Aufwand gleichzeitig von unterschiedlichen Steuerungseinheiten überwacht werden.

In der Praxis ergeben sich zunehmend Auforderungen dahingehend, dass das Signal eines Sensors von der angeschlossenen Steuereinheit an eine weitere Steuereinheit übergeben werden muss. Das setzt eine Anpassung der beiden Steuereinheiten beim Datenaustausch voraus. Derartige Vorgehensweisen lassen sich oftmals nur mit großem steuerungstechnischen Aufwand realisieren. Hier will die Erfindung insgesamt Abhilfe schaffen.

Der Erfindung liegt das technische Problem zugrunde, einen derartigen Kraftfahrzeugtürverschluss so weiter zu entwickeln, dass die Sensorsignale problemlos von der einen angeschlossenen Steuereinheit an eine weitere Steuereinheit übermittelt werden können.

Zur Lösung dieser technischen Problemstellung ist ein gattungsgemäßer Kraftfahrzeugtürverschluss im Rahmen der Erfindung dadurch gekennzeichnet, dass die sämtlichen Strompfade des Leitungsnetzwerkes unterschiedliche elektrische Widerstände aufweisen, welche bei im Wesentlichen konstanter Versorgungsspannung zu jeweils variierender Stromstärke im einzelnen Strompfad korrespondieren.

Im Gegensatz zum aus der Praxis bekannten Stand der Technik sowie der DE 20 2008 010 423 U1 sorgt der erfindungsgemäß eingesetzte Sensor also dafür, dass seine Sensorsignale gleichsam parallel zwei unterschiedliche Steuereinheiten (oder noch mehr) erreichen. Es findet also ausdrücklich keine Datenübertragung mit Blick auf das Sensorsignal von der einen Steuereinheit zur anderen Steuereinheit statt. Vielmehr erhalten beide Steuereinheiten parallel das jeweils auszuwertende Sensorsignal.

Als Folge hiervon steht das Sensorsignal in den fraglichen beiden Steuereinheiten verzögerungsfrei und übereinstimmend zur Verfügung. Außerdem besteht erfindungsgemäß die Möglichkeit, mit ein und demselben Sensor unterschiedliche Steuereinheiten mit Sensorsignalen zu versorgen. Derartige Anforderungen stellen sich oftmals für den Fall, dass der Sensor und die eine Steuereinheit gleichsam eine Baueinheit bilden, die mit unterschiedlichen Steuereinheiten je nach Fahrzeugtyp kommunizieren soll. Das ist erfindungsgemäß problemlos möglich, weil das vom Sensor zur Verfügung gestellte Sensorsignal unmittelbar der zumeist variierenden Steuereinheit des Kraftfahrzeuges parallel zur Verfügung gestellt wird und auch werden kann. Hierin sind die wesentlichen Vorteile zu sehen.

Nach vorteilhafter Ausgestaltung handelt es sich bei der einen Steuereinheit um eine Zentralsteuereinheit und bei der anderen Steuereinheit um eine vorzugsweise untergeordnete Teilsteuereinheit. Im Regelfall ist die Zentralsteuereinheit als Fahrzeug-Elektronik-Einheit ausgestaltet. Demgegenüber handelt es sich bei der Teilsteuereinheit um eine Aggregat-Elektronik-Einheit. Die Aggregat-Elektronik-Einheit bildet meistens mit dem Sensor und gegebenenfalls weiteren Elementen eine Baueinheit. Diese Baueinheit wird in dem Kraftfahrzeug verbaut.

Die Anpassung an den jeweiligen Kraftfahrzeugtyp mag nun dergestalt erfolgen, dass an dieser Stelle mit unterschiedlichen Zentralsteuereinheiten gearbeitet wird. Da das Sensorsignal von dem Sensor parallel nicht nur der Teilsteuereinheit als Aggregat-Elektronik-Einheit zur Verfügung gestellt wird, sondern auch der fraglichen Zentralsteuereinheit, lässt sich die Anpassung an unterschiedliche Kraftfahrzeugtypen unschwer und unmittelbar erledigen. Bei der Aggregat-Elektronik-Einheit kann es sich beispielsweise um eine Zuziehhilfe-Elektronik-Einheit handeln. Denkbar ist auch eine Fensterhebe-Elektronik-Einheit oder auch eine Seitenairbag-Elektronik-Einheit.

Jedenfalls formt die jeweilige Aggregat-Elektronik-Einheit als Teilsteuereinheit in Verbindung mit weiteren Elementen respektive Baugruppen und dem einen oder mehreren Sensoren üblicherweise eine Baueinheit, die meistens komplett als Modul in das zugehörige Kraftfahrzeug eingebaut wird. Sofern es sich um eine Zuziehhilfe-Elektronik-Einheit handelt, gehören zu den weiteren Elementen im Regelfall eine motorische Zuzieheinrichtung und ein korrespondierender Kraftfahrzeugtürverschluss bzw. ein hierzu gehöriges Kraftfahrzeugtürschloss.

Das Kraftfahrzeugtürschloss, die motorische Zuzieheinrichtung und die Zuziehhilfe-Elektronik-Einheit bilden nun in Verbindung mit dem Sensor beispielsweise eine modulare Baueinheit bzw. ein Einbaumodul, welches als Ganzes in eine Kraftfahrzeugtür, insbesondere eine Kraftfahrzeugseitentür, eingebaut werden kann. Dabei reicht es erfindungsgemäß aus, die fragliche Zuziehhilfe-Elektronik-Einheit mit der Zentralsteuereinheit bzw. der Fahrzeug-Elektronik-Einheit zu verbinden. Über eine hierzu gehörige Verbindungsleitung werden lediglich die Sensorsignale des im Beispielfall in die Baueinheit integrierten Sensors parallel nicht nur der Zuziehhilfe-Elektronik-Einheit, sondern zugleich auch der Fahrzeug-Elektronik-Einheit zur Verfügung gestellt. Dadurch kann mit ganz unterschiedlichen Fahrzeug-Elektronik-Einheiten gearbeitet werden und gelingt eine besonders einfache und funktionsgerechte Anpassung an den jeweils gewünschten Kraftfahrzeugtyp.

Im Rahmen der Erfindung ist der Sensor diagnosefähig ausgebildet. In diesem Zusammenhang weist der Sensor im Allgemeinen einen Schalter sowie zwei oder mehr Strompfade eines Leitungsnetzwerkes auf. Da über die einzelnen Strompfade unterschiedliche Stromstärken geführt werden (bei übereinstimmender Versorgungsspannung) lässt sich die beschriebene Diagnosefähigkeit realisieren. Tatsächlich fließt beispielsweise über einen Strompfad auch dann ein Strom, wenn der Schalter geöffnet ist. Dadurch lässt sich die Funktion der Spannungsversorgung und auch die grundsätzliche Funktion des Schalters abfragen. Wenn der Schalter geschlossen wird, fließt der Strom von der Versorgungsspannung durch einen anderen Strompfad des Sensors. Dieser ist mit einer anderen Stromstärke verbunden, so dass auf einfache Weise zwischen dem geöffneten Zustand des Schalters und seinem geschlossenen Zustand unterschieden werden kann.

Zu diesem Zweck ist die eine Steuereinheit vorteilhaft an zwei parallele Zentral-Strompfade angeschlossen. Von diesen beiden Zentral-Strompfaden weist der eine Zentral-Strompfad den Schalter auf. Der andere Zentral-Strompfad ohne Schalter wird durchflossen, wenn der Schalter geöffnet ist. Wird dagegen der Schalter geschlossen, so fließt der von der Versorgungsspannung zur Verfügung gestellt Strom durch den Zentral-Strompfad mit dem dann geschlossenen Schalter.

Im Regelfall sind wenigstens drei Strompfade realisiert. In diesem Zusammenhang ist die Teilsteuereinheit meistens über einen weiteren, dritten Zusatz-Strompfad mit dem Schalter verbunden. Es finden sich also zwei Zentral-Strompfade, die mit der Zentralsteuereinheit gekoppelt sind, wohingegen der weitere dritte Zusatz-Strompfad an die Teilsteuereinheit angeschlossen ist. Auch in den dritten Zusatz-Strompfad ist der Schalter eingeschleift.

Um an dieser Stelle eine Trennung zu erreichen bzw. die beiden zu der einen Steuereinheit gehörigen Strompfade von dem einen Strompfad zu separieren, welcher zur anderen Steuereinheit gehört, ist ein elektronisches Trennelement vorgesehen. Bei diesem Trennelement handelt es sich vorteilhaft um eine Gleichrichter-Diode.

Um die unterschiedlichen Stromstärken in den jeweils wenigstens drei Strompfaden des Leitungsnetzwerkes realisieren zu können, sind die sämtlichen Strompfade des Leitungsnetzwerkes mit unterschiedlichen elektrischen Widerständen ausgerüstet. Diese elektrischen Widerstände korrespondieren bei im Wesentlichen konstanter Versorgungsspannung zu jeweils variierender Stromstärke in dem einzelnen Strompfad. Dabei sind die Widerstände in den Strompfaden meistens von Strompfad zu Strompfad kontinuierlich ansteigend ausgelegt.

Meistens ist der Widerstand im Zusatz-Strompfad am geringsten bemessen, wohingegen der Zentral-Strompfad ohne den eingeschleiften Schalter den größten Widerstand aufweist. Der Zentral-Strompfad mit dem eingeschleiften Schalter liegt von seinem Widerstand her wertemäßig zwischen diesen beiden Extremen. Auf diese Weise ist der elektrische Strom dann am geringsten, wenn der Schalter geöffnet ist. Denn dann fließt der Strom lediglich über den Zentral-Strompfad ohne den eingeschleiften Schalter mit dem höchsten Widerstand. Wird dagegen der Schalter geschlossen, so fließt der von der Versorgungsspannung zur Verfügung gestellte Strom einerseits über den Zentral-Strompfad mit eingeschleiftem Schalter und mittlerem Widerstand und andererseits über den Zusatz-Strompfad mit dem geringsten eingeschleiften Widerstand. Dadurch kann wiederum zwischen den beiden Stromstärken einfach unterschieden werden und lassen sich etwaige Schäden in den zugehörigen Strompfaden problemlos diagnostizieren.

In diesem Zusammenhang ist die Verschaltung so getroffen, dass die Teilsteuereinheit in Stromrichtung hinter dem Trennelement bzw. der Gleichrichter-diode und auch hinter dem Widerstand an den Strompfad mit dem eingeschleiften Schalter angeschlossen ist. Dabei findet sich der Anschlusspunkt vor dem besagten Schalter, so dass die Schalterstellung zuverlässig mit Hilfe der Teilsteuereinheit abgefragt werden kann und ebenso von der Zentralsteuereinheit über den Strompfad mit dem eingeschleiften Schalter.

Eine gegenseitige Beeinflussung ist an dieser Stelle nicht zu befürchten, weil das Trennelement den Anschlusspunkt der Teilsteuereinheit von der Zentralsteuereinheit gleichsam separiert. Dadurch lassen sich beide Steuereinheiten, das heißt die Zentralsteuereinheit und die Teilsteuereinheit, unabhängig voneinander mit den gewünschten Sensorsignalen bzw. den Signalen des Schalters versorgen. Bei dem fraglichen Schalter handelt es sich im Allgemeinen um einen Ein-/Ausschalter, insbesondere einen Mikroschalter. Das ist selbstverständlich nicht zwingend.

Außerdem kann die Versorgungsspannung getaktet werden, so dass auch getaktete Stromstärken hinsichtlich der Stellung des Schalters (ein/aus) und/oder der Funktion der einzelnen Strompfade auszuwerten sind. Das ist selbstverständlich nicht zwingend. Denn in jedem Fall lassen sich die einzelnen Strompfade unschwer dadurch voneinander unterscheiden, dass die jeweils durch den Strompfad fließenden Stromstärken in Folge der unterschiedlichen eingeschleiften Widerstände deutlich voneinander verschieden sind.

Der Sensor, das heißt der Schalter inklusive des zugehörigen Leitungsnetzwerkes, kann insgesamt als Bestandteil eines Elektrokomponententrägers ausgebildet sein. Das heißt, der Schalter lässt sich zusammen mit den Widerständen und dem Leitungsnetzwerk im Rahmen eines solchen Elektrokomponententrägers definieren. Bei einem Elektrokomponententräger handelt es sich im Allgemeinen um eine Leiterbahneinheit, welche mit elektrischen bzw. elektronischen Bauteilen oder Komponenten bestückt werden kann bzw. bestückt wird. Dabei ist sowohl eine ein- als auch beidseitige Bestückung denkbar. Beispiele für solche Bauteile oder Komponenten sind Stecker, Mikroschalter, Sensoren, Motore usw..

Jedenfalls kann der Sensor auf oder an einem solchen Elektrokomponententräger als separater Elektrokomponententräger oder als Bestandteil eines solchen Elektrokomponententrägers definiert werden. Zur detaillierten Ausgestaltung eines solchen Elektrokomponententrägers wird explizit auf die DE 20 2007 005 076 U1 der Anmelderin verwiesen.

Der Elektrokomponententräger und folglich der Sensor mag entweder zu der Zentralsteuereineinheit oder der Teilsteuereinheit gehören. Beides ist grundsätzlich möglich. Dabei umfasst die Erfindung auch eine gemischte Auslegung dergestalt, dass der Sensor ganz oder teilweise in die Teilsteuereinheit und/oder die Zentralsteuereinheit integriert ist. Aus Gründen eines einfachen Aufbaus und einer problemlosen Montage wird man den Sensor im Allgemeinen als Bestandteil der Zentralsteuereinheit auslegen.

Im Ergebnis wird ein Kraftfahrzeugtürverschluss zur Verfügung gestellt, welcher mit einem speziell ausgelegten Sensor ausgerüstet ist. Tatsächlich dient dieser Sensor üblicherweise dazu, die Stellung einer Drehfalle des Kraftfahrzeugtürverschlusses oder allgemein seines Gesperres abzufragen. Aus der Stellung der Drehfalle bzw. des Gesperres, beispielsweise der Information "Hauptraststellung oder Vorraststellung erreicht ja/nein?" lassen sich Informationen einerseits für die Zentralsteuereinheit und andererseits die Teilsteuereinheit bzw. die Zuziehhilfe-Elektronik-Einheit im Beispielfall herleiten.

So mag die Information "Hauptraststellung erreicht: ja" dazu korrespondieren, dass die Zuziehhilfe-Elektronik-Einheit unmittelbar die daran angeschlossene Zuzieheinrichtung abbremst bzw. stoppt. Zugleich und unabhängig hiervon wird mit dem zugehörigen Sensorsignal die Zentralsteuereinheit über die erreichte Hauptraststellung informiert. Die Zentralsteuereinheit mag im Anschluss hieran einen Befehl zur Einnahme einer Diebstahlsicherungsstellung für den Kraftfahrzeugtürverschluss ausgeben.

Jedenfalls wird das fragliche Sensorsignal von den beiden angesprochenen Steuereinheiten unabhängig voneinander verarbeitet. Zugleich stellt die beschriebene Schaltung sicher, dass der Sensor insgesamt diagnosefähig ausgelegt ist bzw. keine undefinierten Schaltzustände beobachtet werden. Denn sowohl der Zustand "geschlossen" des Schalters als auch die Position "offen" des Schalters korrespondieren zu einem Stromfluss, der mit deutlich voneinander verschiedenen Stromstärken flankiert ist. Diese unterschiedlichen Stromstärken lassen sich problemlos voneinander unterscheiden, so dass einerseits auf die Funktionsfähigkeit des Schalters und andererseits seine Funktionsstellung rückgeschlossen werden kann. Hierin sind die wesentlichen Vorteile zu sehen.

Im Folgenden wird die Erfindung anhand einer lediglich ein Ausführungsbeispiel darstellenden Zeichnung näher erläutert; es zeigen:
- **Fig. 1**: einen Gesamtüberblick unter Berücksichtigung des erfindungsgemäßen Kraftfahrzeugtürverschlusses inklusive zugehöriger Steuereinheiten,
- **Fig. 2**: ein Detail aus Fig. 1 und
- **Fig. 3**: den Kraftfahrzeugtürverschluss inklusive der Steuereinheiten schematisch.

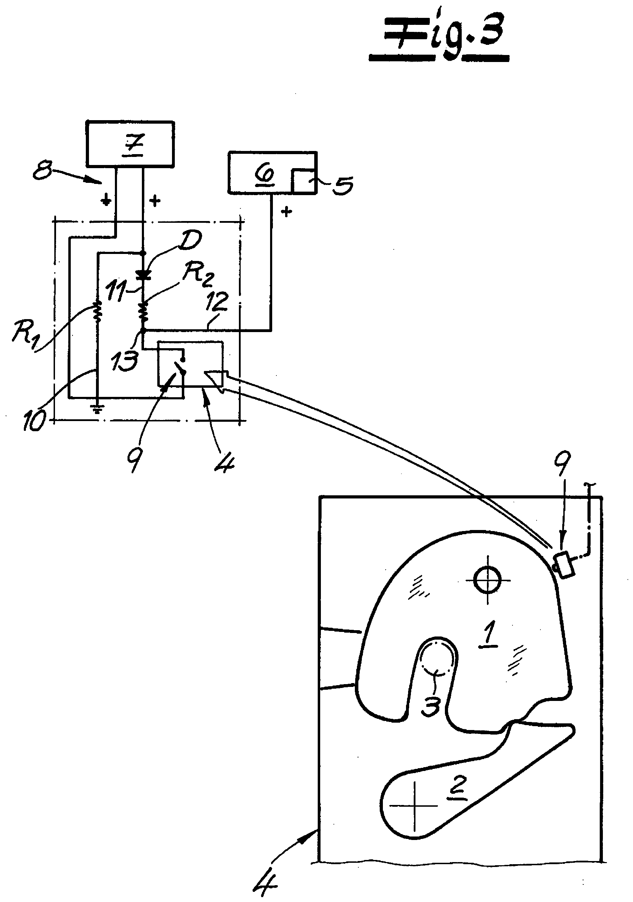

In den Figuren ist ein Kraftfahrzeugtürverschluss dargestellt, welcher mit einem Gesperre 1, 2 ausgerüstet ist. Das Gesperre 1, 2 setzt sich aus einer Drehfalle 1 und einer zugehörigen Sperrklinke 2 zusammen. Mit dem Gesperre 1, 2 wechselwirkt ein Schließbolzen 3. Dabei beobachtet man die übliche Funktionalität, nämlich dergestalt, dass das Gesperre 1, 2 einem Türschloss 4 zugeordnet ist, welches im Regelfall im Innern einer Kraftfahrzeugtür angeordnet ist. Das Türschloss 4 wechselwirkt mit dem Schließbolzen 3, welcher an eine Kraftfahrzeugkarosserie angeschlossen ist (vgl. die vergrößerte Darstellung in Fig. 3). Das Türschloss 4 verfügt im Ausführungsbeispiel über eine angedeutete Zuzieheinrichtung 5 und eine der Zuzieheinrichtung 5 zugeordnete Zuziehhilfe-Elektronik-Einheit 6.

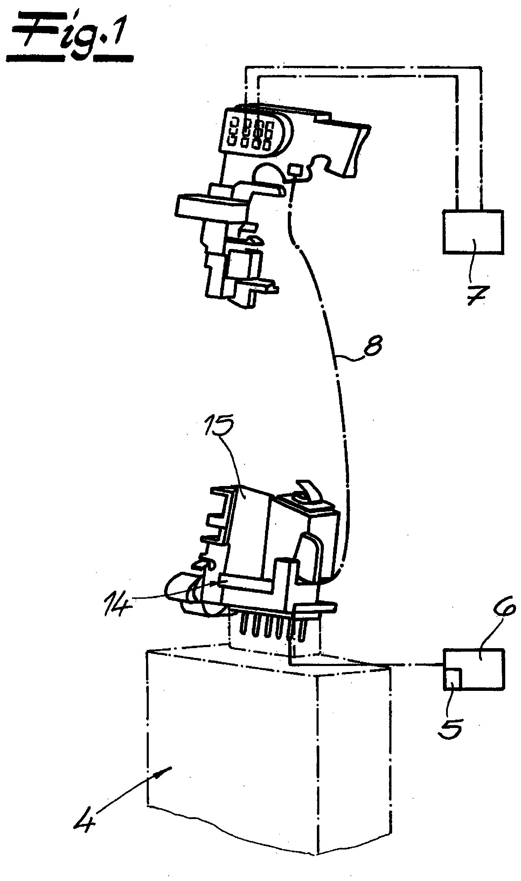

Neben dieser Zuziehhilfe-Elektronik-Einheit 6 als gleichsam Aggregat-Elektronik-Einheit bzw. Teilsteuereinheit 6 ist noch eine Zentralsteuereinheit 7 realisiert, die vorliegend als Fahrzeug-Elektronik-Einheit 7 ausgelegt ist. Die Teilsteuereinheit bzw. Zuziehhilfe-Elektronik-Einheit 6 findet sich ebenso wie die Zuzieheinrichtung 5 und das Türschloss 4 im Innern einer nicht dargestellten Kraftfahrzeugtür, beispielsweise einer Kraftfahrzeugseitentür. Demgegenüber ist die Zentralsteuereinheit bzw. Fahrzeug-Elektronik-Einheit 7 im Innern einer ebenfalls nicht dargestellten Kraftfahrzeugkarosserie angeordnet. Das Türschloss 4 bzw. die Teilsteuereinheit 6 ist über eine Verbindungsleitung 8 mit der Zentralsteuereinheit 7 verbunden, wie dies eine vergleichende Betrachtung der Fig. 1 und 3 deutlich macht. Die Verbindungsleitung 8 sorgt primär dafür, Sensorsignale eines Sensors 9, 10, 11, 12 an die Zentralsteuereinheit 7 übermitteln zu können. Parallel hierzu werden die fraglichen Sensorsignale von dem Sensor 9, 10, 11, 12 auch an die Teilsteuereinheit 6 übermittelt. Das wird besonders anhand der schematischen Darstellung gemäß Fig. 3 deutlich.

Man erkennt, dass an den Sensor 9, 10, 11, 12 folglich und erfindungsgemäß zwei unterschiedliche Steuereinheiten 6, 7 angeschlossen sind. Bei diesen unterschiedlichen Steuereinheiten 6, 7 handelt es sich einerseits um die Teilsteuereinheit 6 und andererseits die Zentralsteuereinheit 7. Die Teilsteuereinheit 6 ist als Zuziehhilfe-Elektronik-Einheit 6 ausgelegt und beaufschlagt die Zuzieheinrichtung 5. Die Teilsteuereinheit 6 findet sich im Innern der Kraftfahrzeugtür bzw. Kraftfahrzeugseitentür. Dagegen dient die Zentralsteuereinheit 7 im Innern der Kraftfahrzeugkarosserie praktisch dazu, sämtliche oder nahezu sämtliche Kraftfahrzeugfunktionen zu überwachen und zu steuern. Anhand der Fig. 3 erkennt man, dass der Sensor 9, 10, 11, 12 zwei oder mehr Schaltzustände aufweist. Diese Schaltzustände werden von einem Schalter 9 als Bestandteil des Sensors 9, 10, 11, 12 zur Verfügung gestellt. Tatsächlich ist der Schalter 9 in der Lage, die Positionen "ein" und "aus" darstellen zu können. Der Schalter 9 ist der Drehfalle 1 zugeordnet und überwacht deren Einnahme einer bestimmten Funktionsstellung (Vorraststellung und/oder Hauptraststellung).

Darüber hinaus verfügt der Sensor 9, 10, 11, 12 über drei Strompfade 10, 11, 12 im Beispielfall. Die drei Strompfade 10, 11, 12 bilden ein Leitungsnetzwerk 10, 11, 12. Dabei unterscheiden sich die drei Strompfade 10, 11, 12 dahingehend, dass zwei parallel zueinander angeordnete Strompfade 10, 11 als Zentral-Strompfade 10, 11 ausgelegt sind. Bei dem dritten Strompfad 12 handelt es sich dagegen um einen Zusatz-Strompfad 12. Die beiden parallelen Zentral-Strompfade 10, 11 sind an die eine Steuereinheit 7, im Ausführungsbeispiel an die Zentralsteuereinheit 7 angeschlossen. Demgegenüber ist der weitere dritte Zusatz-Strompfad 12 mit der anderen Steuereinheit 6, nach dem Ausführungsbeispiel der Teilsteuereinheit 6, verbunden.

Anhand der schematischen Darstellung in der Fig. 3 erkennt man, dass die sämtlichen Strompfade 10, 11, 12 des Leitungsnetzwerkes 10, 11, 12 unterschiedliche elektrische Widerstände R₁, R₂ aufweisen. Aufgrund dieser unterschiedlichen Widerstände R₁, R₂ fließen durch die einzelnen Strompfade 10, 11, 12 verschiedene elektrische Ströme bei im Wesentlichen konstanter und übereinstimmender Versorgungsspannung. Tatsächlich liegt diese Versorgungsspannung (Pluspol in Fig. 3) sowohl an den beiden Zentral-Strompfaden 10, 11 an als auch an dem Zusatz-Strompfad 12. In diesem Zusammenhang ist in den Zentral-Strompfad 10 lediglich der Widerstand R₁ eingeschleift, welcher größer als die in die beiden übrigen Strompfade 11, 12 eingeschleiften Widerstände bemessen ist. Demgegenüber weist der andere Zentral-Strompfad 11 einen kleinen Widerstand R₂ und zusätzlich den eingeschleiften Schalter 9 auf. Des Weiteren ist in den Zentral-Strompfad 11 ein Trennelement D eingeschleift, bei welchem es sich im Ausführungsbeispiel um eine Gleichrichter-Diode D handelt.

Der Zusatz-Strompfad 12 ist in einem Anschlusspunkt 13 an den Zentral-Strompfad 11 mit dem eingeschleiften Schalter 9 angeschlossen. Dabei findet sich der Anschlusspunkt 13 in Stromrichtung vor dem Schalter 9 und hinter dem Widerstand R₂. Außerdem ist der Anschlusspunkt 13 in Stromrichtung hinter der Gleichrichter-Diode D angeordnet.

Der Zusatz-Strompfad 12 weist keinen direkt im Türschloss 4 angeordneten eingeschleiften Widerstand auf. Auf diese Weise ist im Rahmen der Erfindung sichergestellt, dass sämtliche Strompfade 10, 11, 12 des Leitungsnetzwerkes 10, 11, 12 unterschiedliche elektrische Widerstände R₁, R₂ aufweisen. Diese Widerstände R₁, R₂ führen zu jeweils variierender Stromstärke im einzelnen Strompfad 10, 11, 12. Dabei ist die Auslegung so getroffen, dass der Widerstand im jeweiligen Strompfad 10, 11, 12 kontinuierlich ansteigt, und zwar beginnend mit dem Zusatz-Strompfad 12, welcher den geringsten Widerstand aufweist. Der höchste Widerstand R₁ wird in dem Zentral-Strompfad 10 ohne den eingeschleiften Schalter 9 beobachtet. Der Zentral-Strompfad 11 mit dem eingeschleiften Schalter 9 weist einen mittleren Widerstand R₂ auf. Nach dem Ausführungsbeispiel handelt es sich bei dem Widerstand R₁ um einen 3,9 kΩ Widerstand, wohingegen der Widerstand R₂ lediglich 510 Ω beträgt. Das ist selbstverständlich nur beispielhaft zu verstehen.

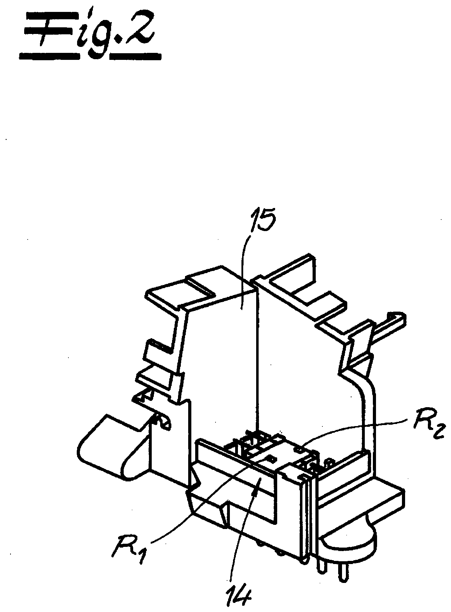

Anhand der Fig. 2 erkennt man, dass der Sensor 9, 10, 11, 12 als Bestandteil eines Elektrokomponententrägers 14 ausgebildet ist. Dieser Elektrokomponententräger 14 ist seinerseits Bestandteil eines Steckergehäuses 15, welches im Wesentlichen in der Fig. 2 dargestellt ist. Das Steckergehäuse 15 ist seinerseits an das Türschloss 4 angeschlossen. Mit dem Türschloss 4 kommuniziert die Teilsteuereinheit bzw. Zuziehhilfe-Elektronik-Einheit 6. Außerdem kommuniziert mit dem Türschloss 4 die bereits angesprochene Zuzieheinrichtung 5, welche ihrerseits von der Zuziehhilfe-Elektronik-Einheit 6 beaufschlagt wird.

Die Funktionsweise ist wie folgt.

Der der Drehfalle 1 zugeordnete Schalter 9 bzw. Mikroschalter 9 mag in der Position "Vorrast" der Drehfalle 1 gegenüber der Sperrklinke 2 geschlossen werden. Solange der fragliche Schalter 9 seine Stellung "offen" aufweist, fließt ein Strom von der Zentralsteuereinheit 7 über den dortigen Ausgang (Pluspol) durch den Zentral-Strompfad 10 über den Widerstand R₁ zur Masse bzw. dem entsprechend gekennzeichneten Eingang der Zentralsteuereinheit 7. Hierzu gehört eine bestimmte und sich durch den Widerstand R₁ unter Berücksichtigung der Versorgungsspannung einstellende Stromstärke. Diese Stromstärke wird mit Hilfe der Zentralsteuereinheit 7 detektiert und dokumentiert, dass die Versorgungsspannung anliegt und das Leitungsnetzwerk 10, 11, 12 grundsätzlich funktionstüchtig ist.

Sobald der Schalter 9 die Stellung "geschlossen" einnimmt, welche im Beispielfall zum Erreichen der Vorraststellung der Drehfalle 1 korrespondiert, fließt ein Sensorstrom ausgehend von der Zentralsteuereinheit 7 nicht mehr über den Zentral-Strompfad 10, sondern über den hierzu parallelen Zentral-Strompfad 11. Das läst sich auf den im Zentral-Strompfad 11 vorhandenen geringeren Widerstand R₂ zurückführen. Zugleich fließt ein Sensorstrom ausgehend von der Teilsteuereinheit 6 ebenfalls über den nun geschlossenen Schalter 9, und zwar durch den Anschlusspunkt 13. Die Gleichrichter-Diode D verhindert, dass sich die beiden Ströme durch den Zentral-Strompfad 11 und den Zusatz-Strompfad 12 gegenseitig beeinflussen.

Das Sensorsignal führt dazu, dass die Teilsteuereinheit 6 die Zuzieheinrichtung 5 beaufschlagt, welche die Drehfalle 1 von der detektierten Vorraststellung in die Hauptraststellung überführt. Ein Beispiel für eine solche Zuzieheinrichtung wird in der DE 10 2004 036 655 A1 vorgestellt. Am Ende dieses Zuziehvorganges findet sich die Drehfalle 1 in der Hauptraststellung und die Zuzieheinrichtung 5 wird abgeschaltet.

## Patentansprüche

1. Kraftfahrzeugtürverschluss, mit einer Schaltungsanordnung mit wenigstens einem Sensor (9, 10, 11, 12), und mit zumindest einer angeschlossenen Steuereinheit (6, 7), wobei
- der Sensor (9, 10, 11, 12) zwei oder mehr Schaltzustände aufweist, wobei ferner
- an den Sensor (9, 10, 11, 12) zwei unterschiedliche Steuereinheiten (6, 7) angeschlossen sind, und wobei
- der Sensor (9, 10, 11, 12) einen Schalter (9) sowie zwei oder mehr Strompfade (10, 11, 12) eines Leitungsnetzwerkes (10, 11, 12) aufweist,
**dadurch gekennzeichnet, dass**
- die sämtlichen Strompfade (10, 11, 12) des Leitungsnetzwerkes (10, 11, 12) unterschiedliche elektrische Widerstände (R₁, R₂) aufweisen, welche bei im Wesentlichen konstanter Versorgungsspannung zu jeweils variierender Stromstärke im einzelnen Strompfad (10, 11, 12) korrespondieren.

2. Kraftfahrzeugtürverschluss nach Anspruch 1, **dadurch gekennzeichnet, dass** es sich bei der einen Steuereinheit (7) um eine Zentralsteuereinheit (7) und bei der anderen Steuereinheit (6) um eine vorzugsweise untergeordnete Teilsteuereinheit (6) handelt.

3. Kraftfahrzeugtürverschluss nach Anspruch 2, **dadurch gekennzeichnet, dass** die Zentralsteuereinheit (7) als Fahrzeug-Elektronik-Einheit (7) und die Teilsteuereinheit (6) als Aggregat-Elektronik-Einheit (6), beispielsweise Zuziehhilfe-Elektronik-Einheit (6), ausgebildet ist.

4. Kraftfahrzeugtürverschluss nach einem der Ansprüche 1 bis 3, **dadurch gekennzeichnet, dass** der Sensor (9, 10, 11, 12) diagnosefähig ausgebildet ist.

5. Kraftfahrzeugtürverschluss nach einem der Ansprüche 1 bis 4 , **dadurch gekennzeichnet, dass** die eine Steuereinheit (7) an zwei parallele Zentral-Strompfade (10, 11) angeschlossen ist, von denen der eine Strompfad (11) den Schalter (9) aufweist.

6. Kraftfahrzeugtürverschluss nach einem der Ansprüche 1 bis 5, **dadurch gekennzeichnet, dass** die andere Steuereinheit (6) über einen weiteren dritten Zusatz-Strompfad (12) mit dem Schalter (9) verbunden ist.

7. Kraftfahrzeugtürverschluss nach einem der Ansprüche 1 bis 6, **dadurch gekennzeichnet, dass** die Widerstände (R₁, R₂) in den Strompfaden (10, 11, 12) von Strompfad zu Strompfad kontinuierlich ansteigend ausgelegt sind, beginnend mit dem Zusatzstrompfad (12) und endend mit dem Zentralstrompfad (10) ohne eingeschleiften Schalter (9).

8. Kraftfahrzeugtürverschluss nach einem der Ansprüche 1 bis 7, **dadurch gekennzeichnet, dass** die beiden zu der einen Steuereinheit (7) gehörigen Strompfade (10, 11) und der eine zur anderen Steuereinheit (6) gehörige Strompfad (12) voneinander durch ein elektronisches Trennelement (D) separiert sind.

9. Kraftfahrzeugtürverschluss nach Anspruch 8, **dadurch gekennzeichnet, dass** es sich bei dem Trennelement (D) um eine Gleichrichter-Diode (D).

10. Kraftfahrzeugtürverschluss nach einem der Ansprüche 1 bis 9, **dadurch gekennzeichnet, dass** der Sensor (9, 10, 11, 12) als Bestandteil eines Elektrokomponententrägers (14) ausgebildet ist.

11. Kraftfahrzeugtürverschluss nach einem der Ansprüche 1 bis 10, **dadurch gekennzeichnet, dass** der Sensor (9, 10, 11, 12) ganz oder teilweise in die Teilsteuereinheit (6) und/oder die Zentralsteuereinheit (7) integriert ist.

## Claims

1. Motor vehicle door lock with a circuit arrangement having at least one sensor (9, 10, 11, 12) and having at least one connected control unit (6, 7), wherein
- the sensor (9, 10, 11, 12) has two or more switching states, wherein further
- two different control units (6, 7) are connected to the sensor (9, 10, 11, 12), and wherein
- the sensor (9, 10, 11, 12) has a switch (9) and two or more current paths (10, 11, 12) of a conductor network (10, 11, 12),
**characterized in that**
- all current paths (10, 11, 12) of the conductor network (10, 11, 12) have different electrical resistors (R₁, R₂), which correspond to varying current strengths in each of the individual current paths (10, 11, 12) for a substantially constant supply voltage.

2. Motor vehicle door lock according to Claim 1, **characterized in that** the one control unit (7) is a central control unit (7) and the other control unit (6) is a preferably ancillary subcontrol unit (6).

3. Motor vehicle door lock according to Claim 2, **characterized in that** the central control unit (7) is embodied as a vehicle electronics unit (7), and the subcontrol unit (6) is embodied as an assembly electronics unit (6), for example a closing aid electronics unit (6).

4. Motor vehicle door lock according to any one of Claims 1 to 3, **characterized in that** the sensor (9, 10, 11, 12) is designed to be diagnosable.

5. Motor vehicle door lock according to any one of Claims 1 to 4, **characterized in that** the one control unit (7) is connected to two parallel central currant paths (10, 11), of which the one current path (11) includes the switch (9).

6. Motor vehicle door lock according to any one of Claims 1 to 5, **characterized in that** the other control unit (6) is connected to the switch (9) via a further, third additional current path (12).

7. Motor vehicle door lock according to any one of Claims 1 to 6, **characterized in that** the resistors (R₁, R₂) are designed to be continuously rising from current path to current path in the current paths (10, 11, 12), starting from the additional current path (12) and ending with the central current path (10) without the switch (9) looped in.

8. Motor vehicle door lock according to any one of Claims 1 to 7, **characterized in that** the two current paths (10, 11) belonging to the one control unit (7) and the current path (12) belonging to the other control unit (6) are separated from each other by an electronic separator element (D).

9. Motor vehicle door lock according to Claim 8, **characterized in that** the separator element (D) is a rectifier diode (D).

10. Motor vehicle door lock according to any one of Claims 1 to 9, **characterized in that** the sensor (9, 10, 11, 12) is embodied as a component of an electronic component carrier (14).

11. Motor vehicle door lock according to any one of Claims 1 to 10, **characterized in that** the sensor (9, 10, 11, 12) is fully or partly integrated in the subcontrol unit (6) or the central control unit (7).

## Revendications

1. Fermeture de porte de véhicule automobile avec un système de circuit avec au moins un capteur (9, 10, 11, 12) et avec au moins une unité de commande raccordée (6, 7),
- le capteur (9, 10, 11, 12) comportant deux ou plusieurs états de connexion,
- deux unités de commande (6, 7) différentes étant en plus raccordées au capteur (9, 10, 11, 12), et
- le capteur (9, 10, 11, 12) comportant un interrupteur (9) ainsi que deux ou plusieurs trajets de courant (10, 11, 12) d'un réseau filaire (10, 11, 12),
**caractérisée en ce que**
- tous les trajets de courant (10, 11, 12) du réseau filaire (10, 11, 12) comportant des résistances électriques différentes (R₁, R₂), lesquelles correspondent pour l'essentiel à une tension d'alimentation constante à une intensité de courant respectivement variable dans le trajet de courant individuel (10, 11, 12).

2. Fermeture de porte de véhicule automobile selon la revendication 1, **caractérisée en ce qu'**il s'agit concernant d'une unité de commande (7) d'une unité de commande centrale (7) et concernant l'autre unité de commande (6) d'une unité de commande partielle de préférence subordonnée (6).

3. Fermeture de porte de véhicule automobile selon la revendication 2, **caractérisée en ce que** l'unité de commande centrale (7) est constituée comme unité électronique de véhicule (7) et l'unité de commande partielle (6) comme unité électronique de groupe (6), par exemple unité électronique d'assistance (6).

4. Fermeture de porte de véhicule automobile selon l'une quelconque des revendications 1 à 3, **caractérisée en ce que** le capteur (9, 10, 11, 12) est constitué pouvant être diagnostiqué.

5. Fermeture de porte de véhicule automobile selon l'une quelconque des revendications 1 à 4, **caractérisée en ce qu'**une unité de commande (7) est raccordée à deux trajets de courant (10, 11) centraux parallèles dont un trajet de courant (11) comporte l'interrupteur (9).

6. Fermeture de porte de véhicule automobile selon l'une quelconque des revendications 1 à 5, **caractérisée en ce que** l'autre unité de commande (6) est reliée à l'interrupteur (9) par le biais d'un autre troisième trajet de courant supplémentaire (12).

7. Fermeture de porte de véhicule automobile selon l'une quelconque des revendications 1 à 6, **caractérisée en ce que** les résistances (R₁, R₂) sont conçues en croissance continue dans les trajets de courant (10, 11, 12) d'un trajet de courant à un autre, en commençant avec le trajet de courant supplémentaire (12) et en terminant par le trajet de courant central (10) sans interrupteur en boucle (9).

8. Fermeture de porte de véhicule automobile selon l'une quelconque des revendications 1, **caractérisée en ce que** les deux trajets de courant (10, 11) appartenant à une unité de commande (7) et le trajet de courant (12) appartenant à l'autre unité de commande (6) sont séparés les uns des autres par un élément de séparation électronique (D).

9. Fermeture de porte de véhicule automobile selon la revendication 8, **caractérisée en ce que** concernant l'élément de séparation (D), il s'agit d'une diode de redresseur (D).

10. Fermeture de porte de véhicule automobile selon l'une quelconque des revendications 1 à 9, **caractérisée en ce que** le capteur (9, 10, 11, 12) est constitué comme composant d'un support de composants électriques (14).

11. Fermeture de porte de véhicule automobile selon l'une quelconque des revendications 1 à 10, **caractérisée en ce que** le capteur (9, 10, 11, 12) est intégré entièrement ou partiellement dans l'unité de commande partielle (6) et/ou l'unité de commande centrale (7).
